# EUROPEAN PATENT APPLICATION

(11) **EP 4 819 323 A1**
(43) Date of publication of application: **07.10.2026**
(21) Application number: 25168036.9
(22) Date of filing: 02.04.2025
(51) Int. Cl.: H01M 50/209, H01M 50/244, H01M 50/264, H01M 50/291, H01M 10/6556

(54) **METHOD OF ASSEMBLING A BATTERY PACK, BATTERY PACK ASSEMBLY SYSTEM AND A BATTERY PACK**

(71) Applicant: SAMSUNG SDI CO., LTD., Yongin-si, Gyeonggi-do 17084 (KR)
(72) Inventor: Rath, Helmut, 8481 St. Veit / Südstmk. (AT)
(74) Representative: Gulde & Partner

(57) **Abstract**

The present disclosure refers a method for assembling a battery pack (100) in a battery pack assembly line (210), comprising the steps of: obtaining (S100) battery module frame (10) with at least one accommodation compartment within the battery module frame (10); coupling (S200) the battery module frame (10) in a receiving compartment of a battery pack frame (20) to be releasably coupled to the battery pack frame (20); and inserting (S300) a battery cell stack (40), after the battery module frame (10) is releasably coupled to the battery pack frame (20), in the battery module frame (10) and coupling the battery cell stack (40) within the battery module frame (10) by adhesive force.

The present disclosure further relates to a battery pack assembly system (200) and a battery pack (100).

## Description

### Field of the Disclosure

Embodiments of the present disclosure relate to a method of assembling a battery pack, a battery pack assembly system and a battery pack.

### Technological Background

A battery module is formed of a plurality of battery cells connected together in series or in parallel and integrated in a battery module frame. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

Current battery modules, in particular large format modules, allow for only a cell stacking assembly process but no for a cell pocketing assembly process. However, more current large format modules allow both (stacking and pocketing) on the same assembly line which may save costs.

However, battery packs may further be distinguished into two types of battery packs. According to a first type, battery modules may be releasably coupled in the battery pack frame so that the battery modules can be exchanged. Such battery packs are as well referred to as module-battery-pack and may allow to exchange battery cells through the battery modules. According to a second type, a battery pack may not include battery modules and the battery cell stack is directly coupled into the battery pack frame without having battery modules. Such battery packs are also referred to as C2P (cell-to-pack) battery packs. In this case, the battery cells are not exchangeable but allow for more compact structure and higher energy density. The choice between the two types of battery packs depends on the particular application and customer's needs.

For the assembly process for the two different types a battery packs two separate battery pack assembly lines are required. This results in higher production costs and duplication of assembly equipment. Further, even if a unified assembly process may be considered saving costs and duplication, mechanical stability and reinforcement of the battery pack or the space consumption need to be taken care of.

### Summary of Invention

The invention is defined by the appended claims. The description that follows is subjected to this limitation. Any disclosure lying outside the scope of the claims is only intended for illustrative as well as comparative purposes.

According to an embodiment of the present disclosure, a method for assembling a battery pack in a battery pack assembly line is provided. The method includes the step of obtaining a battery module frame with at least one accommodation compartment within the battery module frame. The method further includes the step of coupling the battery module frame in a receiving compartment of a battery pack frame to be releasably coupled to the battery pack frame. The method further includes the step of inserting, after the battery module frame is releasably coupled to the battery pack frame, a battery cell stack including a plurality of battery cells into the battery module frame and coupling the battery cell stack within the battery module frame by an adhesive force.

According to another embodiment, a battery pack assembly system for assembling battery packs is provided. The battery pack assembly system includes a battery pack assembly line, at least one assembly unit and at least one control unit. The at least one control unit selectively controls the at least one assembly unit to assemble the battery pack of a first type with battery module frame on the battery pack assembly line including the above assembly steps. The at least one control unit selectively controls the at least one assembly unit to assemble, on the same battery pack assembly line, the battery pack of a second type without battery module frame.

Yet another embodiment of the present disclosure refers to a battery pack. The battery pack includes a battery pack frame including at least one receiving compartment. The battery module frame with at least one accommodation compartment is releasably coupled in a receiving compartment of a battery pack frame. A battery cell stack includes a plurality of battery cells in the battery module frame that is coupled, after the battery module frame is releasably coupled to the battery pack frame, within the battery module by an adhesive force.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIGS. 1A-I illustrate a method for assembling a battery pack according to an embodiment.
FIG. 1A illustrates a perspective view of a battery module according to an embodiment.
FIG. 1B illustrates a perspective view of a battery module coupled to a battery pack frame according to an embodiment.
FIG. 1C illustrates a perspective view of a battery module coupled to a battery pack frame with a coupled battery cell stack.
FIG. 1D illustrates a perspective view of a battery module coupled to a battery pack frame with applied adhesive.
FIG. 1E illustrates a perspective view of a battery module coupled to a battery pack frame with coupled longitudinal holder.
FIG. 1F illustrates a perspective view of a battery module coupled to a battery pack frame with a clamping beam.
FIG. 1G illustrates a perspective view of a battery module coupled to a battery pack frame with a cross beam member.
FIG. 1H illustrates a perspective view of a battery module coupled to a battery pack frame with cell connection unit cover.
FIG. 1I illustrates a perspective view of a battery module coupled to a battery pack frame with cooler convection top cover.
FIG. 2 illustrates an exploded view of a battery pack according to an embodiment.
FIG. 3 illustrates schematically a battery pack assembly system according to an embodiment.
FIG. 4A illustrates a battery pack of a first type according to an embodiment.
FIG. 4B illustrates a battery pack of a second type according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to an embodiment of the present disclosure, a method for assembling a battery pack in a battery pack assembly line is provided. The method includes the step of obtaining a battery module frame with at least one accommodation compartment within the battery module frame. The method further includes the step of releasably coupling the battery module frame in a receiving compartment of a battery pack frame. The method further includes the step of inserting, after the battery module frame is releasably coupled to the battery pack frame, a battery cell stack including a plurality of battery cells in the battery module frame and coupling the battery cell stack within the battery module frame by adhesive force.

Releasably, i.e. exchangeable, coupling means that the battery module can be released, for example, by screws or other fastening members. The battery module frame may be manufactured and delivered by a supplier or it can be produced in a module-frame assembly line. In embodiments, the battery module frame may include the cooler, e.g. as cooler plate, or it can be part of the battery housing frame. The adhesive force can be performed by a structural adhesive, e.g., two-sided. For example, an adhesive from a bead roll may be used to be applied to a contact surface. As alternative, a transmissive interface material, TIM, may be used. For example, a TIM may be used instead of the combination of adhesive and cooling plate to minimize thickness. The releasable coupling to the battery pack frame may include the coupling through fastening members, e.g., bolts or screws.

The method has an advantage that the assembly steps have a manufacturing equivalence (manufacturing is congruent) with the battery pack assembly steps required for a cell-to-pack (C2P) assembly processes. Thus, the above assembly-method could be applied on a same battery pack assembly-line as for the for a cell-to-pack (C2P) assembly processes. Thus, duplicative assembly equipment is not required and the manufacturing process is made more efficient since the same manufacturing resources (same assembly line) can be used for producing both types of battery packs. Thus, the assembly method provides flexibility for the use of a battery assembly-line for different customer requirements in exchangeable-modules or not exchangeable-modules (C2P).

According to one embodiment, the side panels of the at least on battery module frame include an upper support panel extending in a longitudinal direction of the battery module frame, wherein the method further includes the step of providing a longitudinal holder which extends in the longitudinal direction. The method further includes applying adhesives to at least one of the longitudinal holder, the battery cell stack and the upper support panel of the battery module frame. The method further includes coupling the longitudinal holder with the battery cell stack and the upper support panel of the battery module frame through the adhesives. Thus, through the longitudinal holder, the batters cell stack and the battery module are stably supported and immobilized. The longitudinal holder may include a stepped cross section, i.e. The adhesives, here and in the following, may be obtained from a bead roll. For example, a z-holder having a z-shape or may include a z-shaped profile.

According to one embodiment, the longitudinal holder includes a stepped cross section profile with a top contacting panel, a side contacting panel extending perpendicular from the top contacting panel and a bottom panel extending parallel to the top contacting panel. The applying of the adhesive includes: applying the adhesive to at least one among a lower surface of the top contacting panel of the longitudinal holder and a side portion on a top surface of the battery cell stack extending in the longitudinal direction. Further, the applying of the adhesives includes applying the adhesives to at least one among a lower surface of the bottom contacting panel of the longitudinal holder and a side portion on an upper surface of the upper support panel of the battery module frame. The coupling includes coupling of the longitudinal holder to adhesively couple the top contacting panel with the side portion on the top surface of the battery cell stack through the adhesives, to adhesively couple the lower surface of the bottom contacting panel of the longitudinal holder with the side portion on the upper surface of the upper support panel of the battery module frame through the adhesives, and contacting the side contacting panel with a side surface of the battery cell stack. Thus, through the longitudinal holder having the stepped cross section, the adhesive can be easily applied to the side portions and stable over planar surfaces is provided. Thus, the battery cell stack and the battery module are stably coupled and immobilized with respect to each other. In other words, the longitudinal holder may include a stepped cross section, i.e., for example, a z-holder having a z-shape or may include a z-shaped profile.

According to one embodiment, the longitudinal holder and the upper support panel of the battery module frame include a plurality of overlapping fixation holes. The method further includes fixating the longitudinal holder with the battery module frame and/or a side frame member of the battery pack frame through fastening members passing through the overlapping fixation holes. The side frame member may include fixation holes overlapping the fixation holes of longitudinal holder and upper support panel. Thus, stable fixation with the battery pack frame and the battery module frame can be achieved in releasable manner.

According to one embodiment, wherein the step of fixating includes providing a clamping beam including a plurality of fixation holes, positioning the clamping beam on the upper support panel of the battery module frame and/or on an upper surface of the bottom contacting panel of the longitudinal holder, wherein the fixating includes fixating the longitudinal holder with the battery module frame and/or a side frame member of the battery pack frame with fastening members passing through the fixation holes of the clamping beam. A fastening member may be a screw or a bolt. The clamping beam may be a solid beam. Since the clamping beam is used, the number of fastening members can be reduced. This is since the clamping beam helps to homogeneously transfer the forces.

According to one embodiment, the upper support panel includes a plurality of alternating upper protruded portions and recessed portions, wherein the protruded portions are positioned in the recessed portions of an adjacent battery module frame, wherein the fixation holes are formed in the protruded portions. Thus, an extension in width-wise direction can be reduced while still providing sufficient space for the fixation holes in the recessed portions. For example, the delta in width according to the inserted length of the protruded portion can be saved for each side.

According to one embodiment, the battery module frame further includes an intermediate plate separating the accommodation space into separate parts, wherein the method includes providing a reinforcement cross beam member, positioning the reinforcement cross beam member to pass through a through hole of the intermediate plate in a cross direction perpendicular to the longitudinal direction and positioned on the upper support panel and/or the clamping beam, and fixating the reinforcement cross beam member with at least one fastening member passing through fixation hole of the reinforcement cross beam member. The reinforcement cross beam member stabilizes the entire battery pack. In particular, since the longitudinal holders may be oriented in parallel, together with the reinforcement cross beam member, stabile and robust support structure is provided. The fastening members may be longer than the fastening members for the clamping beam. The reinforcement cross beam member may be of steal.

According to one embodiment, the method includes coupling a cell connecting unit layer on the top surface of the battery cell stack. The cell connecting unit layer may provide contacting of the battery cell terminals. The cell connecting unit layer may be a foil or cover.

According to one embodiment, the method includes coupling a cooler convection top cover on the top surface of the battery cell stack. Thus, excess heat can be additionally removed from the top.

According to one embodiment, the method includes, for assembling a battery pack without battery module frame, inserting, on the same battery pack assembly line, a battery cell stack including a plurality of battery cells in another type of battery pack frame to couple the battery cell stack directly with the another type of battery pack frame. Thus, the method may allow to perform direct cell-to-pack assembling on the same battery pack assembly line. Only the type, e.g. the size of the battery pack frame may be different to increase the cell package ratio, i.e., energy density. Thus, the method is selective and flexible between manufacturing different type of battery packs one having the exchangeable battery modules and the other one without it.

According to one embodiment, the method further includes providing the longitudinal holder which extends in the longitudinal direction and applying the adhesives to at least one of the longitudinal holder, a top surface of a side frame member of the battery pack frame, the battery cell stack; and coupling the longitudinal holder with the battery cell stack and top surface of a side frame member of the battery pack frame through the adhesives. Thus, the equivalent coupling steps may be performed by using the side frame member without battery module. These sets are repeated in the following.

According to one embodiment, the longitudinal holder includes a stepped cross section profile with a top contacting panel, a side contacting panel extending perpendicular from the top contacting panel and a bottom panel extending parallel to the top contacting panel. The applying of the adhesives includes: applying the adhesives to at least one among a lower surface of the top contacting panel of the longitudinal holder and a side portion on a top surface of the battery cell stack extending in the longitudinal direction. Further, the applying of the adhesives includes applying the adhesives to at least one among a lower surface of the bottom contacting panel of the longitudinal holder and a side portion on an upper surface of the side frame member of the battery pack frame. The coupling includes coupling of the longitudinal holder to adhesively couple the top contacting panel with the side portion on the top surface of the battery cell stack through the adhesives, to adhesively couple the lower surface of the bottom contacting panel of the longitudinal holder with the side portion on the upper surface of the upper surface of the side frame member through the adhesives, and contacting the side contacting panel with a side surface of the battery cell stack. Thus, the same contacting can be applied also in the cell-to-pack assembling.

According to one embodiment, the longitudinal holder and the side frame member include a plurality of overlapping fixation holes. The method further includes fixating the longitudinal holder with the side frame member of the battery pack frame through fastening members passing through the overlapping fixation holes.

According to one embodiment, the step of fixating includes providing a clamping beam including a plurality of fixation holes, positioning the clamping beam on an upper surface of the bottom contacting panel of the longitudinal holder, wherein the fixating includes fixating the longitudinal holder with the side frame member of the battery pack frame with fastening members passing through the fixation holes of the clamping beam.

According to one embodiment, the battery pack frame further includes an intermediate frame member separating the receiving space into separate parts, wherein the method includes providing a reinforcement cross beam member, positioning the reinforcement cross beam member to pass through a through hole of the intermediate frame member in a cross direction perpendicular to the longitudinal direction and positioned on the clamping beam, and fixating the reinforcement cross beam member with at least one fastening member passing through the fixation hole of the reinforcement cross beam member. Thus as shown above, the same manufacturing steps can be applied in analogue manner.

According to one embodiment, a battery pack includes a battery pack frame comprising at least one receiving compartment. The battery pack includes a battery module frame with at least one accommodation compartment releasably coupled in a receiving compartment of a battery pack frame. The battery pack includes a battery cell stack including a plurality of battery cells in the battery module frame that is coupled, after the battery module frame is releasably coupled to the battery pack frame, within the battery module by an adhesive force.

According to an embodiment, a battery pack assembly system for assembling battery packs is provided. The battery pack assembly system includes a battery pack assembly line, at least one assembly unit and at least one control unit. The at least one control unit may selectively control the at least one assembly unit to assemble the battery pack of a first type with battery module frame including the assembly steps according to any of the previous embodiments and the following disclosure on the battery pack assembly line. The at least one control unit controls the at least one assembly unit to assemble, on the same battery pack assembly line, the battery pack of a second type without battery module frame. Thus, the system is adaptive to produce battery cell packs of different types in flexible manner.

According to an embodiment, a size of the battery pack frame of the first type is larger than a size of the battery pack frame of the second type. Merely a redesign of size is necessary because a shorter X-/ & Y-dimension for the battery pack is possible

According to one embodiment, a battery pack includes a battery pack frame including at least one receiving compartment. The battery pack includes a battery module frame releasably coupled in the at least one accommodation compartment with the battery pack frame. A battery cell stack including a plurality of battery cells is coupled in the battery module frame, that is releasably coupled with the battery pack frame, to couple the battery cell stack by an adhesive force. The same advantages apply to the above. Such battery packs can be manufactured equivalently like cell-to-pack battery packs reducing manufacturing costs.

According to one embodiment, the longitudinal holder includes a stepped cross section profile with a top contacting panel, a side contacting panel extending perpendicular from the top contacting panel and a bottom panel extending parallel to the top contacting panel. The adhesive is provided on at least one among a lower surface of the top contacting panel of the longitudinal holder and on a side portion on a top surface of the battery cell stack extending in the longitudinal direction. Further, the adhesive is provided on at least one among a lower surface of the bottom contacting panel of the longitudinal holder and a side portion on an upper surface of the upper support panel of the battery module frame. The top contacting panel of the longitudinal holder is adhesively coupled with the side portion on the top surface of the battery cell stack through the adhesive, and the bottom contacting panel of the longitudinal holder to the side portion on the upper surface of the upper support panel of the battery module frame through the adhesive, and the side contacting panel contact with a side surface of the battery cell stack. More stable fixation with the battery module can be reached as described above in more detail.

According to an embodiment, the longitudinal holder and the upper support panel of the battery module frame include a plurality of overlapping fixation holes, wherein the longitudinal holder is coupled with the battery module frame and/or a side frame member of the battery pack frame through fastening members passing through the overlapping fixation holes. More stable fixation with the battery module can be reached.

According to one embodiment, the batter pack includes a clamping beam including a plurality of fixation holes, the clamping beam positioned on the upper support panel of the battery module frame and/or on an upper surface of the bottom contacting panel of the longitudinal holder. The longitudinal holder is fixated with the battery module frame and/or a side frame member of the battery pack frame with fastening members passing through the fixation holes of the clamping beam.

According to one embodiment, the upper support panel includes a plurality of alternating upper protruded portions and recessed portions, wherein the protruded portions are positioned in the recessed portions of an adjacent battery module frame, wherein the fixation holes are formed in the protruded portions.

According to one embodiment, the battery module frame further includes an intermediate plate separating the accommodation space into separate parts. The battery pack includes a reinforcement cross beam member, the reinforcement cross beam member positioned to pass through a through hole of the intermediate plate in a cross direction perpendicular to the longitudinal direction and positioned on the upper support panel and/or the clamping beam. The reinforcement cross beam member is fixated with at least one fastening member passing through fixation hole of the reinforcement cross beam member.

### Specific Embodiments

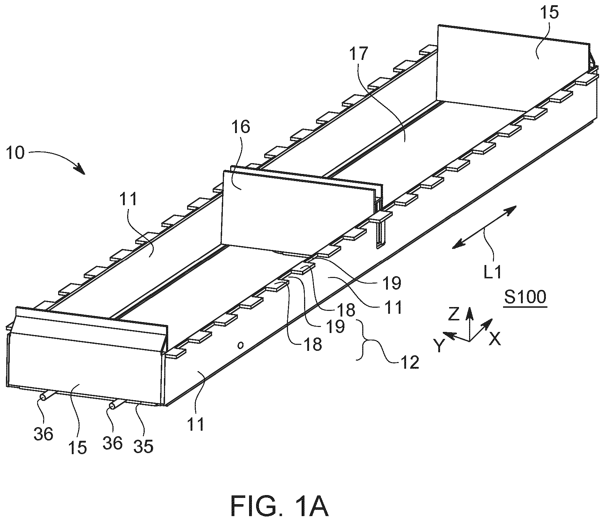

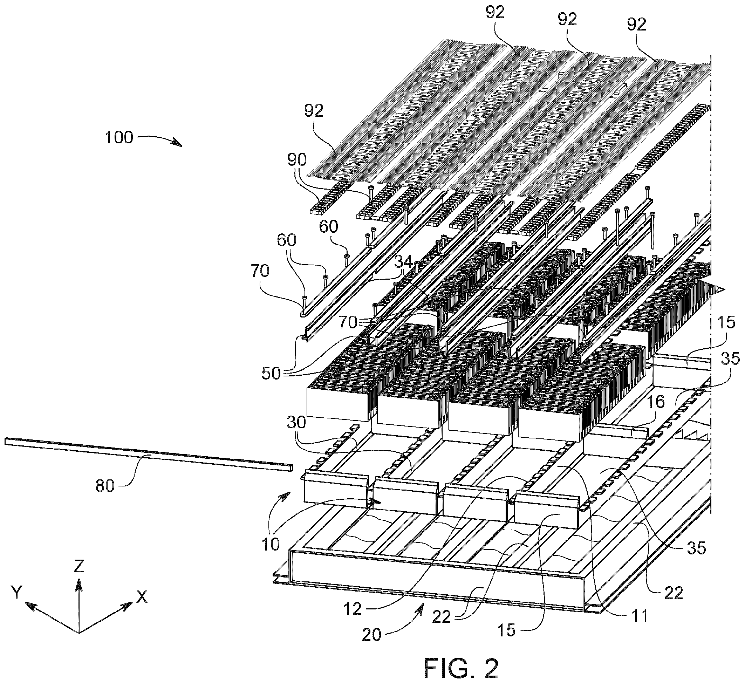

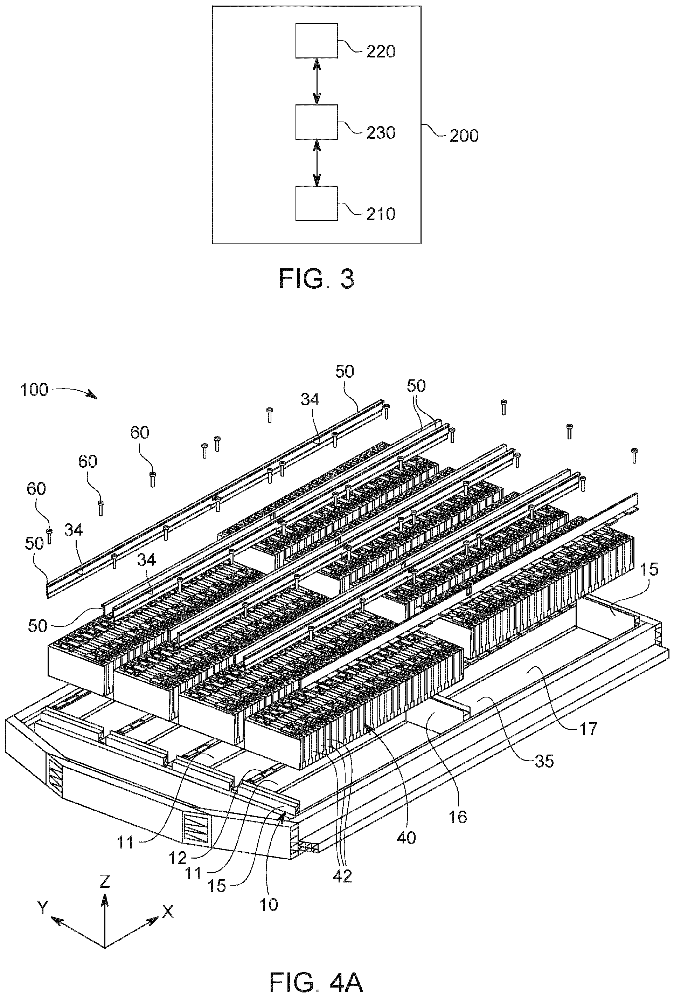

FIGS. 1A-1I illustrate a method for assembling a battery pack 100 in a battery pack assembly line according to an embodiment. FIG. 2 illustrates an exploded view of the battery pack 100. FIG. 4A also shows battery pack 100 according to an embodiment. In the following, the method and the features of the resulting battery pack 100 referring to FIG. 2 and 4A are described together to for the sake conciseness.

FIG. 1A illustrates a perspective view of a battery module frame 10 according to an embodiment showing a step of obtaining S100 a battery module frame 10 (and FIG. 2). The battery module frame 10 may be manufactured as a manufacturing step in a separate module frame assembly line. Alternatively, the battery module frame 10 may be pre-assembled, e.g. by an external supplier, to be used by the battery pack assembly system 200, i.e., provided as a pre-assembled input thereto.

The battery module frame 10 includes at least one accommodation compartment within the battery module frame 10. The battery module frame 10 may include side panels 11 extending in a longitudinal direction L1. Opposite side panels 11 may face each other. The battery module frame 10 may further include end plates 15 at opposite ends. In this case, the battery module frame 10 may include an intermediate plate 16 for providing two accommodation compartments. However, the disclosure is not restricted thereto.

In addition, the battery module frame 10 may include a bottom plate 17. In embodiments, the bottom plate 17 may include a cooling plate 35 to circulate coolant through the battery module frame 10. For example, the cooling plate 35 may form the bottom plate 17 or may be below the bottom plate 17, to carry away excess heat in operation. As shown in FIG. 1A, in this case, the battery module frame 10 may include cooling inlet/outlet ports 36 to supply and/or to withdraw cooling fluid (e.g., water).

In other embodiments, the cooling structure may only be part of the battery pack 100 instead of the battery module frame 10. In another embodiment, the cooling plate 35 may be replaced by a thermal interface material layer. This may reduce a height dimension in z-direction.

The battery module frame 10 referring to FIGS. 1A or 1B, 2 and 4, as will be described below in more detail, may include an upper support panel 12 extending in a longitudinal direction L1 of the battery module frame 10. The upper support panel 12 may be bent to extend from the side panel 11 perpendicular therefrom (i.e., in horizontal direction).

According to an embodiment and as explained further below, the upper support panel 12 includes a plurality of alternating upper protruded portions 18 and recessed portions 19, which are recessed with respect to the protruded portions 18.

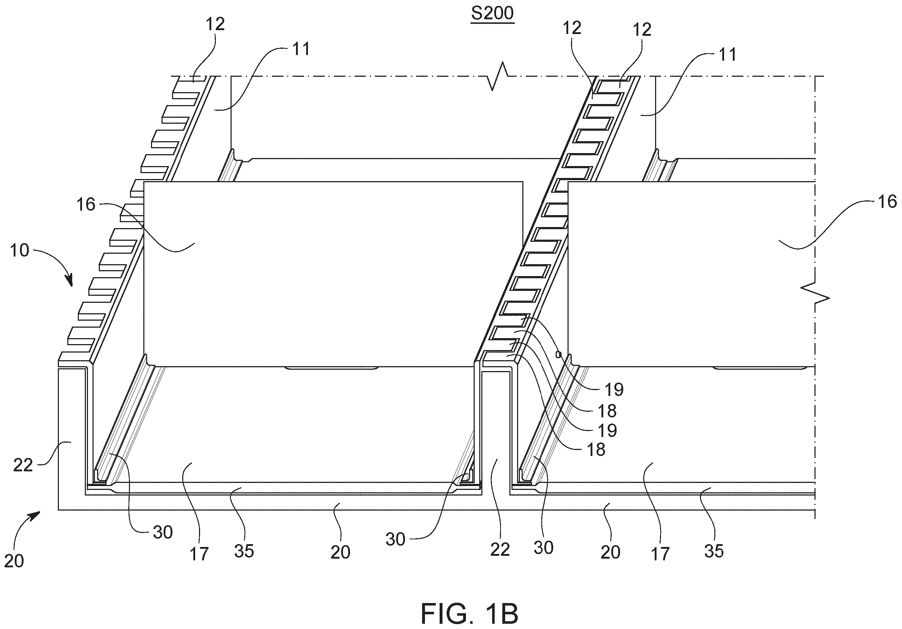

According to FIG. 1B, the method includes the step of coupling S200, i.e. joining, the battery module frame 10 in a receiving compartment of a battery pack frame 20. In this case, the battery module frame 10 is releasably coupled to the battery pack frame 20. The releasable i.e. exchangeable, coupling may be achieved by fastening members like screws and/or bolts (here not shown). Therefore, before the battery cell stack 40 is included, the battery module frame 10 is releasably coupled with the battery pack frame 20.

As shown in FIG. 1B, the method may include the step of applying an adhesive 30 to the bottom plate 17. For example, the adhesive 30 may be applied to a side portion of the bottom plate 17. In examples, the adhesive 30 may be applied as well to the side panel 11, at least a side portion thereof. Alternatively, as mentioned above, a thermal interface material layer may be provided, i.e. disposed on, the bottom plate 17.

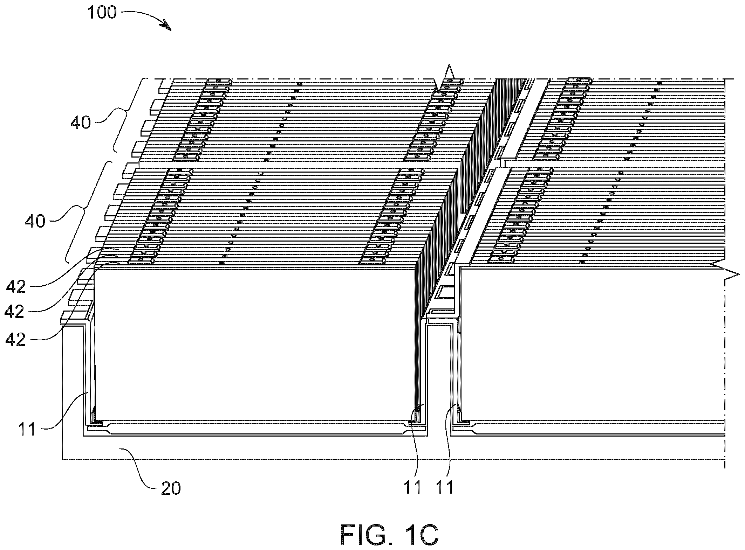

As shown in FIGS.1C, 2 and 4A, the method includes the step of inserting S300, after the battery module frame 10 is releasably coupled to the battery pack frame 20, a battery cell stack 40 into the battery module frame 10 in a state where the battery module frame 10 is (already) coupled with the battery pack frame 20. The battery cell stack 40 may be pre-stacked together or may be stacked as integrated part of the battery pack assembly line 210 (see FIG. 3).

The battery cell stack 40 incudes a plurality of battery cells 42 stacked together. The battery cells 42 may be prismatic type battery cells as shown in FIG. 1C. However, a shape of the battery cell 42 is not limed thereto. The battery module frame 10 is coupled, i.e. joined, with the battery pack frame 20 to couple the battery cell stack 40 within the releasably coupled battery module frame 10 by an adhesive force. For example, the adhesive force may be reached through the adhesive 30 applied as described above or by a thermal interface material layer or a combination thereof.

As such, since the battery cell stack 40 is installed after the battery module frame 10 is (already) installed, the assembly method is compatible (equivalent) with a cell-to-pack (C2P) assembly. Thus, the above assembly-method can be performed on a same battery pack assembly line 210 as for the cell-to-pack assembly processes.

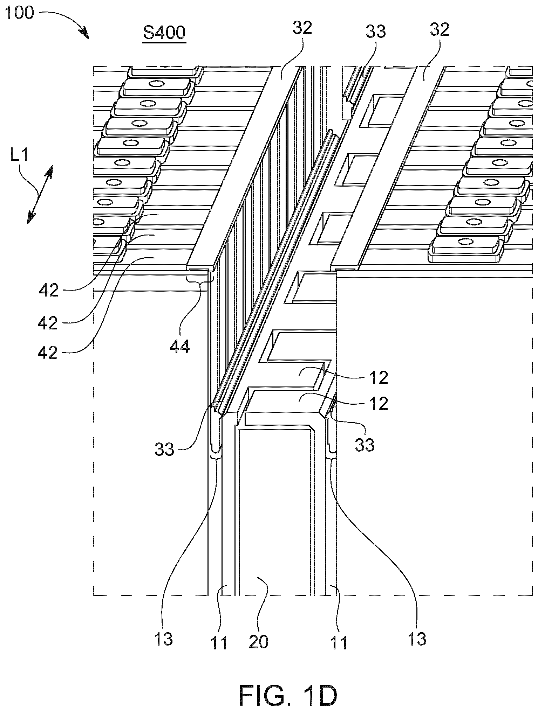

Referring now to FIGS. 1D and 1E, 2 and 4A, the method and the battery pack 100 may include providing a longitudinal holder 50. The longitudinal holder 50 (or z-holder) may be positioned and oriented to extend in the longitudinal direction L1 of the battery module frame 10. The longitudinal holder 50 may support the fixation of the battery cell stack 40 with the battery module frame 10. In addition, the longitudinal holder 50 may also support the coupling with the battery pack frame 20. This will be explained in the following.

The method may further include a step of applying S400 at least one of adhesives 32, 33, 34 to the longitudinal holder 50, the battery cell stack 40 and the upper support panel 12 of the battery module frame 10. In the embodiment of FIG. 1D, an adhesive 32 is applied to the battery cell stack 40, an adhesive 33 is applied to the upper support panel 12 of the battery module frame 10. As well, another adhesive 34 may be applied to the longitudinal holder 50 as indicated in FIG. 2 or FIG. 4A.

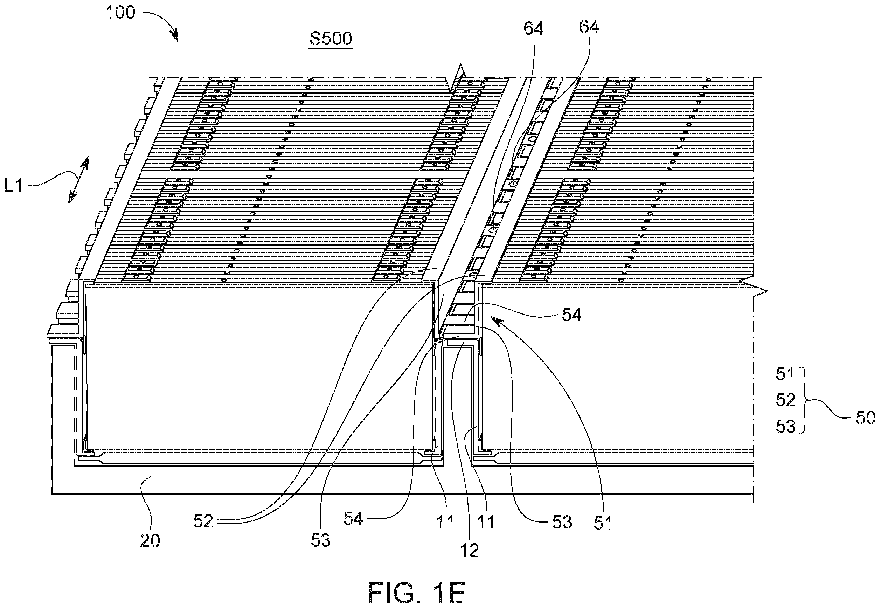

The method may include, as shown in FIG. 1E, the step of coupling S500 of the longitudinal holder 50 with the battery cell stack 40 and the upper support panel 12 of the battery module frame 10 through the adhesives 32, 33, 34. As such, the longitudinal holder 50 provides a stabile connection between the battery cell stack 40 with the battery module frame 10 that is releasably coupled to the battery pack frame 20.

In the following, an embodiment having improved coupling strength is explained. The longitudinal holder 50 includes a stepped cross section profile 51, or z-profile. This can be seen in FIGS. 1E, 1F, 2 and 4. The longitudinal holder 50 may include a top contacting panel 52, a side contacting panel 53 extending perpendicular from the top contacting panel 52 (and parallel to a side of the battery cell stack 40) and a bottom panel 54 extending parallel to the top contacting panel 52.

The applying of the adhesives 32, 33, 34 as shown in FIG. 1D is now described in more detail. The applying S400 of the adhesives 32, 33, 34 includes applying the adhesive 32 to a side portion 44 on a top surface of the battery cell stack 40 extending in the longitudinal direction L1. In addition (or in alternative), as shown in FIG. 2, an adhesive 33 may be applied to a lower surface of the top contacting panel 52 of the longitudinal holder 50.

Further, the adhesive 33 may be applied to a side portion 13 (facing the battery cell stack 40) on an upper surface of the upper support panel 12 of the battery module frame 20. In addition, or in alternative, the adhesive 34 may be applied to a lower surface of the bottom contacting panel 54 of the longitudinal holder 50 (see e.g. FIIG. 2 or FIG. 4A).

The coupling S500 as shown in FIGS. 1E, 2 and 4A may then include a coupling of the longitudinal holder 50 to adhesively couple the top contacting panel 52 with the side portion 44 on the top surface of the battery cell stack 40 through the adhesives 32, 34 and to adhesively couple the lower surface of the bottom contacting panel 54 of the longitudinal holder 50 with the side portion 13 on the upper surface of the upper support panel 12 of the battery module frame 10 through the adhesives 33, 34. The geometry implies a contacting of the side contacting panel 53 with a side surface of the battery cell stack 40. As such, a stable adhesive-based and internal structurally stable connection is provided due to the stepped cross section structure and the planar side portions 13, 44 having the adhesives 32, 33 making use of the structure of the longitudinal holder 50.

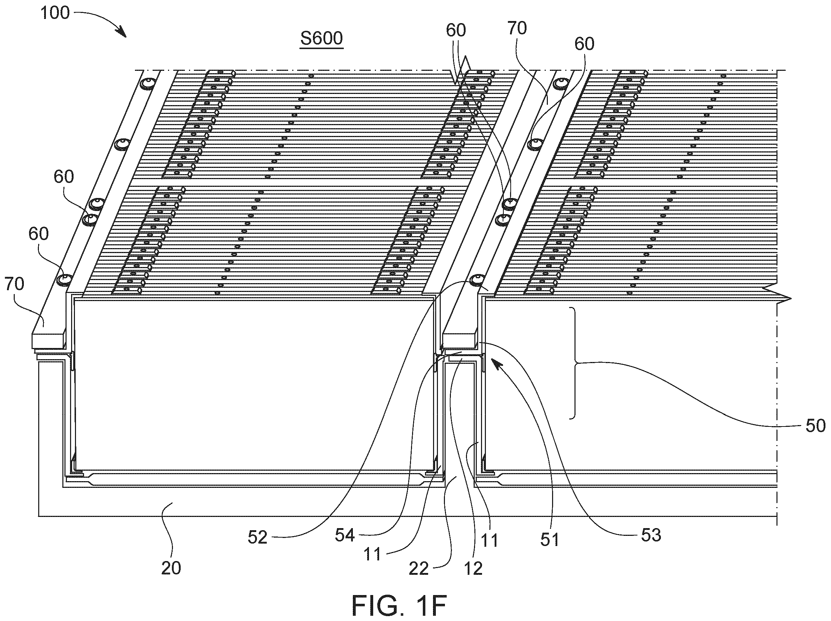

Referring now to FIG. 1F, FIG. 2 and 4A, the longitudinal holder 50 and the upper support panel 12 of the battery module frame 10 include a plurality of overlapping fixation holes 64 (here only schematically shown in FIG. 1E). In Fig. 1F, this is indirectly shown by the fastening members 60, e.g. screws.

The method may include step of fixating S600 the longitudinal holder 50 with the battery module frame 10 and/or a side frame member 22 of the battery pack frame 20 through fastening members 60 passing through the overlapping fixation holes 64. The fastening members 60 are shown in FIG. 1F or as well in FIG. 2 and FIG. 4A.

In a specific embodiment, the fixating S600 may include the step providing of a clamping beam 70. The clamping beam 70 may include a plurality of fixation holes (indicated in FIG. 1F indirectly through where the fastening members 60 are inserted). The clamping beam 70 may be positioned to extend along the longitudinal direction L1, i.e., in direction of the longitudinal holder 50.

In addition, the positioning of the clamping beam 70 is on the upper support panel 12 of the battery module frame 10. In an embodiment, when the longitudinal holder 50 is provided as described above, the clamping beam 70 may be located on the longitudinal holder 50, for example, on an upper surface of the bottom contacting panel 54 of the longitudinal holder 50. This is shown in FIG. 1F or FIG. 2 in the exploded view.

In addition, as shown in FIG. 1F, the fixating S600 includes fixating the longitudinal holder 50 with the battery module frame 10 and/or a side frame member 22 of the battery pack frame 20 through the fastening members 60 as described above, which may pass through the fixation holes of the clamping beam 70 and the overlapping fixation holes 64. As such, the clamping beam 70 may stabilize the mechanical fixation. In particular, a number of fastening members 60 may be reduced due to the presence of the clamping beam 70. This is since the clamping beam 70 mechanically transfers a homogenized pressing force requiring a smaller number of applied fastening members 60 and thereby improving the manufacturing process and the stability of the batter pack 100.

As already referred to above, the upper support panel 12 may include a plurality of alternating protruded portions 18 and recessed portions 19. Referring to FIG. 1B, the protruded portions 18 of an adjacent battery module frame 10 are positioned in the recessed portions 19 of the other adjacent battery module frame 10. In this embodiment, the fixation holes are formed in the protruded portions 18. This configuration allows to reduce lateral space (size in with-direction) due to the alternation while the protruded portions 18 still allow to integrate sufficient space to include the fixation holes 64.

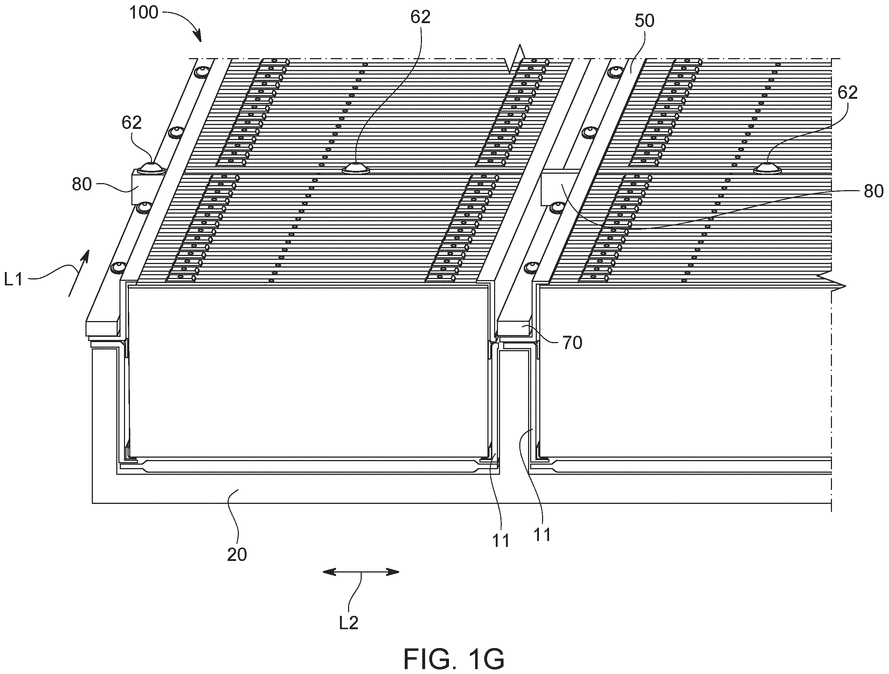

Referring now to FIGS. 1B, 1G and FIG. 2, the method may include another stabilization enforcement as explained below. In an embodiment, the battery module frame 10 includes an intermediate plate 16. The intermediate plate 16 separates the accommodation space into separate parts as shown in FIG. 1B, for example.

The method includes providing a reinforcement cross beam member 80 (see also FIG. 2). The reinforcement cross beam member 80 is positioned to pass through a through hole of the intermediate plate 16 and/or the longitudinal holder 50 in a cross direction L2 perpendicular to the longitudinal direction L1. The reinforcement cross beam member 80 may be positioned on the upper support panel 12 and/or on the clamping beam 70 if provided.

Further, according to FIG. 1G, the reinforcement cross beam member 80 may be fixated with a fastening member 62 passing through fixation holes of the reinforcement cross beam member 80. For example, the reinforcement cross beam member 80 may be fastened with longer fastening member 62 than the fastening members 60 for fastening the clamping beam 70. Thus, the fastening member 62 may pass through the reinforcement cross beam member 80 and the clamping beam 70, the longitudinal holder 50 and/or the side frame member 22 of the batter pack frame 20. Therefore, a reinforced support of the entire battery pack 100 is reached due to the cross beam member 80 coupled and extending in cross direction L2.

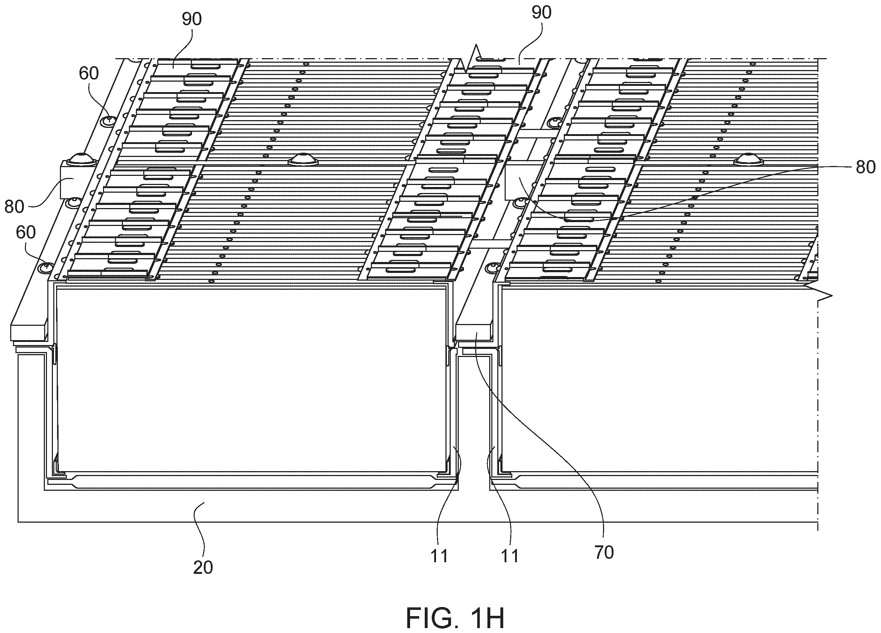

According to FIG. 1H and 2, a cell connecting unit layer 90 may be coupled onto the top surface of the battery cell stack 40. Thus, the battery cells 42 of the battery cell stack 40 may be properly electrically contacted. The cell connecting unit layer 90 may be a foil member or coating member.

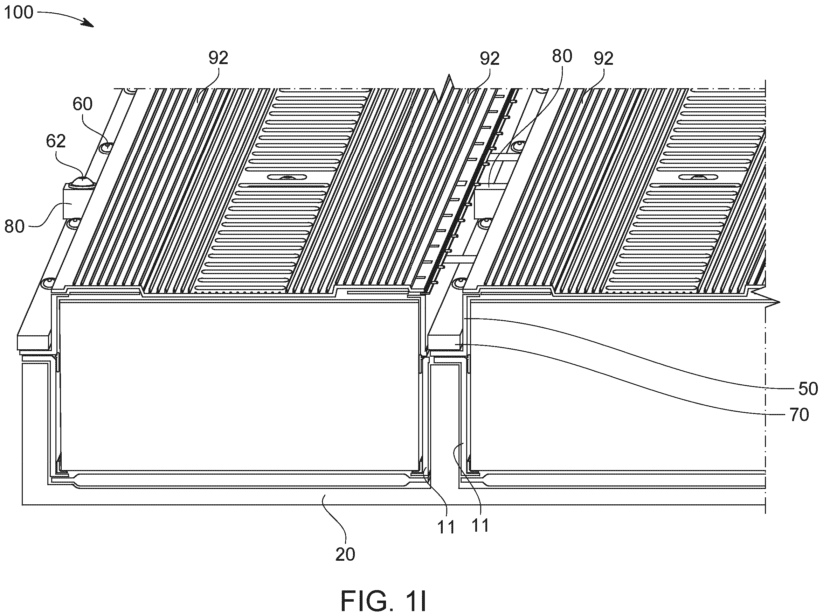

Further, according to FIG. 1I and 2, a cooler convection top layer 92 may be coupled onto the top surface of the battery cell stack 40. For example, the cooler convection top layer 92 may be coupled on the cell connecting unit layer 90. The cooler convection top layer 92 may improve cooling performance of the batter pack 100.

With the above described method steps and the structural features described therein, the battery pack 100 according to FIG. 2 or FIG. 4A may be provided.

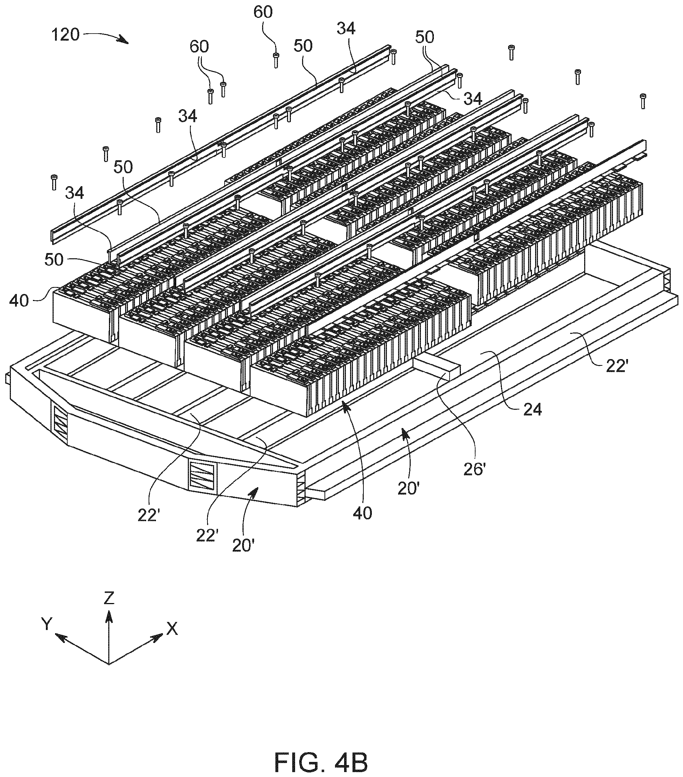

As described further below and as shown in FIGS. 4B, the method for assembling a battery pack 120 without battery module frame (C2P assembling), may include the inserting, on the same battery pack assembly line 210, a battery cell stack 40 including a plurality of battery cells 42 in another battery pack frame 20' to couple the battery cell stack 40 directly with the another battery pack frame 20' without use of a battery module frame 10 (see FIG. 4A).

Thus, the above described manufacturing method can be applied both for battery packs 100, 120 with battery module frame 10 or without battery module frame. Manufacturing costs and manufacturing resources can be more effectively used and the assembly process becomes mor efficient and flexible.

FIG. 3 shows a battery pack assembly system 200 for assembling battery packs 100, 120. The battery pack assembly system 200 may include at least one assembly unit 220, e.g., a plurality of assembly units 220 like robots, grippers or any other common assembly devices. The battery pack assembly system 200 may further include a batter pack assembly line 210. The battery pack assembly system 200 may further include at least one control unit 230. The at least one control unit 230 may control the operations of the at least one assembly unit 220 and/or the battery pack assembly line 210.

The at least one control unit 230 may selectively configured to control the at least one assembly unit 220 to assemble the battery pack of a first type 100 (see FIG. 4A) with battery module frame 10 including the assembly steps as described above on the battery pack assembly line 210. This method may be applied according to the embodiments as described above with respect to the FIGS. 1A to 1I. In addition, the at least one least one assembly unit 220 may selectively assemble, on the same battery pack assembly line 210, the battery pack of a second type 120 (see FIG. 4B) without battery module frame (i.e. cell-to-pack assembly).

In an embodiment, a size, e.g. in each of an x- or y-dimension, of the battery pack frame 20 for the first type is larger than a size of the battery pack frame 20' of the second type. Thus, the battery pack assembly system 200 may adaptively and selectively manufacture both types of battery packs 100, 120 on a single battery pack assembly line 210.

For example, as shown in FIG. 4B, a battery pack 120 according to a second type is shown. The battery pack 120 may include a battery pack frame 20' of a second type. In this case, no battery modules are additionally provided. Thus, higher energy density may be achieved.

The battery pack frame 20' includes at least one receiving compartment. As mentioned above, the receiving compartments may be smaller since the dimensions for a battery module frames do not have to be included.

The battery cell stack 40 includes the plurality of battery cells 42 and which are coupled directly with the battery pack frame 20' to couple the battery cell stack 40 by an adhesive force. In this case, the bottom plate of the battery pack may include a cooling plate 24 for the entire battery pack 120.

Also in this case, a same longitudinal holder 50 may be provided. The same coupling mechanism may be used as described above. The only difference is the missing of the battery module frame.

Thus, in this case, the adhesives 32, 33, 34 may be applied to the longitudinal holder 50 and the battery cell stack 40 and directly on a top surface of a side frame member 22 of the battery pack frame 20'. Thus, the longitudinal holder 50 is then coupled with the battery cell stack 40 and top surface of a side frame member 22 of the battery pack frame 20' through the adhesives 32, 33, 34. As well, the particular positioning of the adhesives 32, 33, 34 can be performed in the same manner apart from that the adhesive 34 may be directly applied to a side portion of the upper surface of a side frame member 22' of the battery pack frame 20'. Thus, a repetitive description is avoided in the following. The fixation may be achieved by fastening members 60 passing through fixation holes 64 in the longitudinal holder 50 and the side frame member 22' of the battery pack frame 20'.

In an embodiment (not shown in FIG. 4B), a clamping beam 70 may be provided in the same way as described above in detail on the bottom contacting panel 54 of the longitudinal holder 50. In another embodiment (not shown), a reinforcement cross member 80 may be provided as described above. In this case, the reinforcement cross member 80 may pass through an intermediate side portion 26' of the battery pack frame 20. Any further structural features including the cell connecting unit layer 90 and the cooler convection top layer 92 may be included in the same manner.

As such, it is shown that the assembly line 210 is capable of assembling both types battery packs 100, 120 in a single battery pack assembly line 210. Thus, for customers wishing "no exchangeable cells" only a redesign of battery-housing frame 20, 20' is required because a shorter x-y-dimension for the battery pack frame 20' of the second type can be achieved and an assembly at the same battery pack assembly line 210 is possible.

In summary, the assembly steps of the battery pack 100 and the method have a manufacturing equivalence (manufacturing is congruent) with the battery pack assembly steps required for a cell-to-pack (C2P) assembly processes. Thus, the above assembly-method can be performed on a same battery pack assembly line 210 as for the cell-to-pack (C2P) assembly processes. Therefore, duplicative assembly equipment is not required and the manufacturing process is made more efficient since the same manufacturing resources (same assembly line) can be used for producing both types of battery packs. In addition, the battery pack 100 may be structurally reinforced, stably contacted with the battery module frame 10 and the battery pack frame 20 and compact integration can be reached.

### Reference signs

- 10: battery module frame
- 11: side panel
- 12: upper support panel
- 13: side portion
- 15: end plate
- 16: intermediate plate
- 17: bottom plate
- 18: protruded portion
- 19: recessed portion

- 20: battery pack frame (first type)
- 20': battery pack frame (second type)
- 22: side frame member
- 22': side frame member
- 24: cooling plate
- 26': intermediate side member

- 30: adhesive
- 32: adhesive
- 33: adhesive
- 34: adhesive

- 35: cooling plate
- 36: cooling inlet/outlet port

- 40: battery cell stack
- 42: battery cell
- 44: side portion
- 50: longitudinal holder
- 51: stepped cross section profile
- 52: top contacting panel
- 53: side contacting panel
- 54: bottom contacting panel

- 60: fastening member
- 62: fastening member
- 64: fixation hole

- 70: clamping beam

- 80: reinforcement cross member

- 90: cell connecting unit layer
- 92: cooler convection top layer

- 100: battery pack (of first type)
- 120: battery pack of a second type

- 200: battery pack assembly system
- 210: battery pack assembly line
- 220: assembly unit
- 230: control unit

## Claims

1. A method for assembling a battery pack (100) in a battery pack assembly line (210), comprising the steps of:
obtaining (S100) battery module frame (10) with at least one accommodation compartment within the battery module frame (10);
coupling (S200) the battery module frame (10) in a receiving compartment of a battery pack frame (20) to be releasably coupled to the battery pack frame (20); and
inserting (S300), after the battery module frame (10) is releasably coupled to the battery pack frame (20), a battery cell stack (40) comprising a plurality of battery cells (42) in the battery module frame (10) and coupling the battery cell stack (40) within the battery module frame (10) by an adhesive force.

2. The method as claimed in claim 1, wherein side panels (11) of the at least on battery module frame (20) comprise an upper support panel (12) extending in a longitudinal direction (L1) of the battery module frame (10), wherein the method further comprises:
providing a longitudinal holder (50) which extends in the longitudinal direction (L1),
applying (S400) adhesives (32, 33, 34) to at least one of the longitudinal holder (50), the battery cell stack (40) and the upper support panel (12) of the battery module frame (10); and
coupling (S500) the longitudinal holder (50) with the battery cell stack (40) and the upper support panel (12) of the battery module frame (10) through the adhesives (32, 33, 34).

3. The method as claimed in claim 2, wherein the longitudinal holder (50) comprises a stepped cross section profile (51) with a top contacting panel (52), a side contacting panel (53) extending perpendicular from the top contacting panel (52) and a bottom panel (54) extending parallel to the top contacting panel (52), wherein the applying (S400) of the adhesives (32, 33, 34) comprises:
applying the adhesives (32, 34) to at least one among a lower surface of the top contacting panel (52) of the longitudinal holder (50) and a side portion (44) on a top surface of the battery cell stack (40) extending in the longitudinal direction (L1);
applying the adhesives (33, 34) to at least one among a lower surface of the bottom contacting panel (54) of the longitudinal holder (50) and a side portion (13) on an upper surface of the upper support panel (12) of the battery module frame (20); and
wherein the coupling (S500) comprises coupling of the longitudinal holder (50) to adhesively couple the top contacting panel (52) with the side portion (44) on the top surface of the battery cell stack (40) through the adhesives (32, 34), to adhesively couple the lower surface of the bottom contacting panel (54) of the longitudinal holder (50) with the side portion (13) on the upper surface of the upper support panel (12) of the battery module frame (10) through the adhesives (33, 34), and contacting the side contacting panel (53) with a side surface of the battery cell stack (40).

4. The method as claimed in one of the claims 2 to 3, wherein the longitudinal holder (50) and the upper support panel (12) of the battery module frame (10) comprise a plurality of overlapping fixation holes, wherein the method comprises:
fixating (S600) the longitudinal holder (50) with the battery module frame (10) and/or a side frame member (22) of the battery pack frame (20) through fastening members (60) passing through the overlapping fixation holes.

5. The method as claimed in claim 4, wherein the step of fixating (S700) comprises:
providing a clamping beam (70) comprising a plurality of fixation holes,
positioning the clamping beam (70) on the upper support panel (12) of the battery module frame (10) and/or on an upper surface of the bottom contacting panel (54) of the longitudinal holder (50);
wherein the fixating (S600) comprises fixating the longitudinal holder (50) with the battery module frame (10) and/or a side frame member (22) of the battery pack frame (20) through fastening members (60) passing through the fixation holes of the clamping beam (70).

6. The method as claimed in one of the claims 4 to 5, wherein the upper support panel (12) comprises a plurality of alternating upper protruded portions (18) and recessed portions (19), wherein the protruded portions (18) are positioned in the recessed portions (19) of an adjacent battery module frame (10), wherein the fixation holes are formed in the protruded portions (18).

7. The method as claimed in one of the claims 2 to 6, wherein the battery module frame (10) further comprises an intermediate plate (16) separating the accommodation space into separate parts, wherein the method comprises:
providing a reinforcement cross beam member (80),
positioning the reinforcement cross beam member (80) to pass through a through hole of the intermediate plate (16) in a cross direction (L2) perpendicular to the longitudinal direction (L1) and to be positioned on the upper support panel (12) and/or the clamping beam (70), and
fixating the reinforcement cross beam member (80) with at least one fastening member (62) passing through fixation holes of the reinforcement cross beam member (80).

8. A battery pack assembly system (200) for assembling battery packs (100, 120), comprising:
a battery pack assembly line (210);
at least one assembly unit (220);
at least one control unit (230) selectively configured to:
control the at least one assembly unit (220) to assemble the battery pack of a first type (100) with battery module frame (10) comprising the assembly steps according to any of the previous claims 1 to 7 on the battery pack assembly line (210);
control the at least one assembly unit (220) to assemble, on the same battery pack assembly line (210), the battery pack of a second type (120) without battery module frame.

9. The battery pack assembly system (200) as claimed in claim 8,
wherein a size of the battery pack frame (20) of the first type is larger than a size of the battery pack frame (20') of the second type.

10. A battery pack (100), comprising:
a battery pack frame (20) comprising at least one receiving compartment;
the battery module frame (10) with at least one accommodation compartment releasably coupled in a receiving compartment of a battery pack frame (20); and
a battery cell stack (40) comprising a plurality of battery cells (42) in the battery module frame (10) that is coupled, after the battery module frame (10) is releasably coupled to the battery pack frame (20), within the battery module (10) by an adhesive force.

11. The battery pack (100) as claimed in claim 10, wherein side panels (11) of the at least on battery module frame (20) comprise an upper support panel (12) extending in a longitudinal direction (L1) of the battery module frame (10),
a longitudinal holder (50) which extends in the longitudinal direction (L1),
at least one of the adhesives (32, 33, 34) provided on at least one of the longitudinal holder (50), the battery cell stack (40) and the upper support panel (12) of the battery module frame (10); and
the longitudinal holder (50) being coupled with the battery cell stack (40) and the upper support panel (12) of the battery module frame (10) through the adhesives (32, 33, 34).

12. The battery pack (100) as claimed in claim 11, wherein the longitudinal holder (50) comprises a stepped cross section profile (51) with a top contacting panel (52), a side contacting panel (53) extending perpendicular from the top contacting panel (52) and a bottom panel (54) extending parallel to the top contacting panel (52),
the adhesives (32, 34) provided on at least one among a lower surface of the top contacting panel (52) of the longitudinal holder (50) and on a side portion (44) on a top surface of the battery cell stack (40) extending in the longitudinal direction (L1);
the adhesives (33, 34) provided on at least one among a lower surface of the bottom contacting panel (54) of the longitudinal holder (50) and a side portion (13) on an upper surface of the upper support panel (12) of the battery module frame (20); and
wherein the top contacting panel (52) of the longitudinal holder (50) is adhesively coupled with the side portion (44) on the top surface of the battery cell stack (40) through the adhesives (32, 34), and the bottom contacting panel (54) of the longitudinal holder (50) to the side portion (13) on the upper surface of the upper support panel (12) of the battery module frame (10) through the adhesives (33, 34), and the side contacting panel (53) contact with a side surface of the battery cell stack (40).

13. The battery pack (100) as claimed in one of the claims 11 to 12, wherein the longitudinal holder (50) and the upper support panel (12) of the battery module frame (10) comprise a plurality of overlapping fixation holes (64), wherein the longitudinal holder (50) is coupled with the battery module frame (10) and/or a side frame member (22) of the battery pack frame (20) through fastening members (60) passing through the overlapping fixation holes (64).
